(19) Europäisches Patentamt
European Patent Office
Office européen des brevets

(11) Publication number: 0 098 823
A1

(12) EUROPEAN PATENT APPLICATION

(21) Application number: 83870055.7

(22) Date of filing: 08.06.83

(51) Int. Cl.³: B 01 D 53/22

(30) Priority: 11.06.82 US 387570

(43) Date of publication of application: 18.01.84
Bulletin 84/3

(84) Designated Contracting States: BE CH DE FR GB IT LI NL

(71) Applicant: MONSANTO COMPANY, Patent Department 800 North Lindbergh Boulevard, St. Louis, Missouri 63166 (US)

(72) Inventor: Narayan, Raghu Subramani, 912 Camargo Drive, Ballwin Missouri 63011 (US)

(74) Representative: McLean, Peter et al, Monsanto Europe S.A. Patent Department Avenue de Tervuren 270-272 Letter Box No 1, B-1150 Brussels (BE)

# (54) Membrane gas separation processes.

(57) Membrane gas separation processes for permeating gas species which can adversely affect the permeation characteristics of a membrane are disclosed. Permeability creep induced by permeating gas species such as acid gases is reduced by maintaining the partial pressure of permeated acid gases at a sufficiently low level. In particular, carbon dioxide is effectively separated in a membrane gas separator process utilizing a hollow fiber membrane having a sufficiently high ratio of (bore diameter)$^2$/length.

EP 0 098 823 A1

# MEMBRANE GAS SEPARATION PROCESSES

## BACKGROUND OF THE INVENTION

This invention pertains to hollow fiber membrane gas separation processes where there is at least one permeating gaseous species present which may be unduly detrimental to the utility of a polymeric hollow fiber membrane for the intended gas separation.

The viability of the use of polymeric membranes for gas separation, as compared to other separation procedures such as absorption, adsorption, and liquefaction, often depends on the cost of the permeation apparatus and its operating cost. Such cost factors include energy consumption, degree of selectivity of separation which is desired, the total pressure drop of gas components through the permeation apparatus which can be tolerated in conducting the separation procedure, the size and ease of use of such permeation apparatus, and especially the useful life of membranes in the operating environment. In order for selective separation of the one or more desired components in a gaseous stream by the use of polymeric gas separation membranes to be commercially attractive, the membranes must provide an adequately selective separation of one or more desired components at a sufficiently high flux. That is, the selective permeation rate of the desired permeating gas species per unit of membrane surface area must be sufficiently high. Moreover, the membranes must also be capable of withstanding the environmental conditions to

which they may be subjected during the separation operation, so that the useful life of membranes used to effect the separation is economically attractive.

Polymeric gas separation membranes are often prepared in flat film and in hollow fiber form. Flat film membranes may not be as attractive as other membrane configurations due to the need for film membranes to be supported to withstand operating conditions such as high pressure differentials and due to the overall complexity of the permeation apparatus containing flat film membranes. Membranes in the configuration of hollow fibers avoid many of the deficiencies of flat film membranes for many separation operations. Hollow fiber membranes are generally self-supporting, even under operating conditions of high differential pressures, and can provide a substantially greater amount of membrane surface area per unit volume of separation apparatus than that which may be provided by flat film membranes. Thus membrane separation apparatus containing hollow fiber membranes may be attractive from the standpoint of convenience, size and reduced complexity of design. However, in order to provide permeation apparatus which is commercially viable on an economic basis, any membrane, even if inherently capable of providing desired selectivities of separation, fluxes and strength, must also be capable of maintaining these desired properties over an extended period of time in what may be an adverse operating environment. This extended period of time is denoted as the "useful life" of the membrane.

A particularly convenient analytical characteristic of polymeric gas permeable membranes includes the permeability of the membrane for a specific gas through the membrane. The permeability ($P_a/\ell$) of a membrane for gas "a" of a gas mixture through a membrane of thickness "$\ell$" is the volume of gas, referred to standard temperature and pressure (STP), which passes through the membrane per unit of surface area of membrane, per unit of time, per unit of differential partial pressure of the

permeating species across the thickness of the membrane. One method for expressing permeabilities is cubic centimeters (STP) per square centimeter of membrane area per second per differential partial pressure of 1 centimeter of mercury across the membrane thickness ($cm^3(STP)/cm^2$-sec-cmHg). Unless otherwise noted, all permeabilities are reported herein at standard temperatures and pressures of 15.6°C and 1 Bar, respectively. The permeabilities are reported in gas permeation units (GPU), which are $cm^3(STP)/cm^2$-sec-cmHg x $10^{-6}$; thus 1 GPU is 1 x $10^6$ $cm^3(STP)/cm^2$-sec-cmHg. Another convenient relationship for expressing gas permeation characteristics of membranes is separation factor. A separation factor, $\alpha$ a/b, for a membrane for a given pair of gases "a" and "b" is defined as the ratio of the permeability ($P_a/\ell$) of a membrane of thickness "$\ell$" for a gas "a" of a gas mixture to the permeability ($P_b/\ell$) of the same membrane to gas "b".

In practice, separation factor with respect to a given pair of gases for a given membrane can be determined by employing numerous techniques which provide sufficient information for calculation of permeabilities for each of the gases. Several of the many techniques available for determining permeabilities and separation factors are disclosed by Hwang et.al., Techniques of Chemistry, Volume VII, Membranes in Separations, John Wiley & Sons, 1974, at Chapter 12, pages 296-322.

Measurements can be made for pure gas permeation or for blend gas permeation. However, experience has shown that the measured permeability of a membrane for a gas species is higher for pure gas permeation than for blend gas permeation. In general, it is more desirable to determine gas permeation characteristics for blend gases, since the permeabilities and separation factors more closely predict actual membrane gas separation performance characteristics.

Ideally it is preferred to have a polymeric membrane with no deterioration of permeability with time. However, deterioration of permeability is generally observed, resulting in less than desirable membrane performance. Accordingly much effort has been directed to developing polymeric membrane materials with enhanced permeation stability. Effort has also been directed to determining operating environments which produce the highest permeation performance as measured in terms of permeability and separation factor, with the lowest deterioration of permeability.

A particularly valuable analytical tool for evaluating the stability of polymeric membrane permeability properties is the measurement of permeability creep. Permeability creep is defined as the time rate of change of permeability of a particular gas species through a membrane. A convenient method for determining permeability creep is provided by the slope of the relationship of the logarithm of permeability of a species through the membrane as a function of the logarithm of time. (See, for instance, Figure 1, which is a log-log plot of permeability of a membrane of thickness "$\ell$" for species "i" ($P_i/\ell$), versus time "t". Experience has shown that such a relationship is conveniently approximated by a straight line whose negative slope defines permeability creep according to the following relationship, illustrated by Figure 1.

$$\text{Permeability Creep} = \frac{\log (P_i/\ell)_1 - \log (P_i/\ell)_2}{\log t_2 - \log t_1}$$

$$= -\frac{\log (P_i/\ell)_2 - \log (P_i/\ell)_1}{\log t_2 - \log t_1}$$

$$= -\frac{\log \dfrac{(P_i/\ell)_2}{(P_i/\ell)_1}}{\dfrac{t_2}{t_1}}$$

Since units of the fractions of the logarithms cancel, permeability creep is a dimensionless number. And, if permeability diminishes with time (as it usually does), permeability creep is a negative number, for instance -0.1.

The permeability rate changes with time may also be expressed as an exponential function of the form $(P_a/\ell)_2 = (P_a/\ell)_1 \ (t_2/t_1)^{-m}$, where $(P_a/\ell)_2$ is the permeability of the membrane of thickness "$\ell$" for gas "a" at time "$t_2$"; $(P_a/\ell)_1$ is the permeability of the same membrane of thickness "$\ell$" for the same gas "a" at an earlier time "$t_1$"; and "-m" is the slope of a logarithmic plot of permeability versus time. The value of "-m" represents permeability creep.

Since the economic viability of membrane separation processes depends to a significant degree on the performance of the membrane system with time, permeability creep is a key indicator of the useful life of the membrane, as illustrated in the following Table I.

TABLE I

PERMEABILITY, (P/ℓ) [GPU]

| Permeability Creep (-m) | Time in Operation (any elapsed time unit) | | |
|---|---|---|---|
| | 1 | 12 | 60 |
| -0.01 | 100 GPU | 98 GPU | 98 GPU |
| -0.03 | 100 | 93 | 88 |
| -0.07 | 100 | 84 | 75 |
| -0.10 | 100 | 78 | 66 |
| -0.20 | 200 | 61 | 44 |

The data in Table I illustrate that a membrane having a permeability creep of -0.20 would be generally undesirable as compared to a membrane having a permeability creep of -0.01. That is, the economic life of a membrane having a permeability creep of -0.20 deteriorates significantly within a short time, for instance, by about 40 percent between time increments 1 and 12. On the other hand, the economic life of a membrane having a permeability creep of -0.01 would experience only minor deterioration in a similar time period, for instance, about 2 percent between time increments 1 and 12.

Often gas mixtures for which a membrane gas separation is desired may contain one or more species which may be detrimental to the operating characteristics of the polymeric membranes, for instance, to the permeability of gases through the membrane. Such species may adversely affect the polymeric membrane, for instance, by solvation, plasticization, or swelling. Often the adverse effect on the polymeric membrane may be a significant reduction in permeability, a significant reduction in strength of the membrane, or a reduction in selectivity of the membrane for one desired permeating

gas over the other permeating gases. The adverse effects may be rapidly catastrophic or may be manifested in a gradual degradation of desired properties over time. Accordingly such adverse effects can often be monitored by measuring permeability creep.

Depending on the particular membrane, adversely affecting species, such as ammonia, an aromatic species, or water, may be detrimental to the membrane even if the concentration, as measured in terms of partial pressure, of the adversely affecting species is relatively low. In other cases, for instance in the separation of an acid gas such as carbon dioxide or hydrogen sulfide from hydrocarbon gases such as methane, the acid gas is often present in substantial concentrations and is the predominant permeating species. Unfortunately, an acid gas, such as carbon dioxide or hydrogen sulfide, can have an adverse effect on a polymeric membrane of such material as, for instance, polysulfone. In this regard it is known that an acid gas, such as carbon dioxide, can under some conditions plasticize an otherwise rigid structure of a polymeric material such as polysulfone. A membrane of plasticized polymeric material is expected to deform under the stress of differentials in pressure imposed across the membrane to effect permeation.

The copending patent application Serial No. (attorney docket No. 36-6309) of Knieriem et.al., assigned to the assignee of this patent application, relates in part to the discovery that polymeric membranes can be successfully operated to separate adversely affecting gas species from a gaseous mixture with little permeability creep under conditions previously expected to be adverse.

Such membrane separation processes comprise in part removing a permeate gas mixture at a sufficiently high rate that the partial pressure of an adverse affecting gas species at the permeate side of a membrane is maintained less than the critical partial pressure of the adverse affecting species for the membrane. Those

processes allow for advantageously separating an adversely affecting species by selective permeation through a polymeric membrane which exhibits substantial permeability creep, for instance, more negative than about -0.1, when exposed to critical partial pressures of the adversely affecting species.

The term "critical partial pressure" as used herein means the gas phase concentration which describes the relationship of the permeability creep characteristics of the polymeric membrane when exposed to potentially adversely affecting gas species. The term "critical partial pressure" defines the gas phase concentration of an adversely affecting species at or above which the polymeric membrane will exhibit permeability creep more negative than about -0.1. Similarly, it is intended that a membrane exposed to a potentially adversely affecting species at less than the "critical partial pressure" will exhibit permeability creep to a substantially lesser degree, i.e., the permeability creep will generally be less negative than about -0.1. As used herein, the term "critical partial pressure" is intended to have no relationship to the term "critical pressure", which relates to the physical constant which characterizes the pressure above which a gas cannot be liquified by a decrease in temperature.

To effectively utilize membrane gas separator processes it is generally desirable to keep partial pressures of all permeating gas species at a low level to promote the highest possible permeation transport rates and, as taught by Knieriem et.al., to avoid adverse affects of critical partial pressures. With permeation processes utilizing hollow fiber membranes it is often difficult to keep bore pressure low throughout the entire length of a hollow fiber membrane. Accordingly it is difficult to keep the partial pressures of adversely affecting species lower than the critical partial pressure at all points along the length of the hollow fiber membrane.

Often higher than desirable permeate gas pressures are required to economically utilize the permeate gas. For instance, low bore pressure often cannot be achieved simply because the permeate gas is required to be at a relatively high total pressure because of compressor or pump suction pressure requirements for further transport of the permeated gas.

In some instances hollow fiber membranes are available at certain dimensions and permeation characteristics and it may not be possible to operate at low permeate gas pressures solely because of physical dimensions of hollow fiber membranes or the intrinsic permeation properties of such membranes. That is, a low bore pressure may not be achievable simply because the permeability of an adverse affecting species is too high. In other instances it may be desirable to provide as long a length of hollow fiber membrane as possible to achieve economies of scale in building permeators utilizing hollow fiber membranes. This can create significant problems in achieving low bore pressures because of hollow fiber membrane gas transport characteristics.

When a hollow fiber membrane is used in a membrane separation process there are two distinct pressure differentials which relate to permeator performance, a bore pressure differential and a permeation pressure differential. The bore pressure differential provides driving force to cause the permeate gas mixture to flow through the bore of the hollow fiber and exit from the open end of the hollow fiber.

The permeation pressure differential relates to the driving force for mass transfer of the species across the membrane and is defined as the difference in chemical potential of the species as measured at the feed side surface of the membrane and at the permeate side surface of the membrane. For gas permeation the chemical potentials are conveniently approximated by the partial pressure of a permeating gas species in the bulk gas phase contiguous to the respective membrane surface. In

a permeator utilizing a bundle of elongated hollow fiber membranes the bulk gas phase on the outer feed side surface of the hollow fiber membranes often undergoes little total pressure drop. Accordingly the partial pressure of a gas species in contact with the feed side surface is easily calculated as the product of the composition of the species on the shell side and the shell side pressure. The partial pressure of the gas species in the bore of the hollow fiber membrane is similarly calculated as the product of the composition of the species in the bore and the bore side pressure which can vary significantly with the length of the hollow fiber membrane.

With each increment in length of hollow fiber membrane as measured from an open end of a hollow fiber membrane the increment in bore pressure necessary to drive the permeate gas from the bore of the hollow fiber membrane increases not only due to length but also due to incremental volumes of permeated gas. If a long enough length of hollow fiber membrane is provided the partial pressure of an adverse affecting gas species can increase to beyond the critical partial pressure.

## SUMMARY OF THE INVENTION

The invention relates to a hollow fiber membrane permeation process for separating at least one gas from a feed gas mixture by permeation through a hollow fiber membrane having an outer feed side surface and a central bore, said membrane exhibiting selectivity to the permeation of said at least one gas and said hollow fiber membrane having a permeability creep more negative than about -0.1 when exposed to critical partial pressures of said at least one gas, said process comprising:

(a) permeating a gas mixture enriched in said at least one gas, from the outer feed side surface to the

bore of said membrane, said permeating being effected by maintaining the partial pressure of said at least one gas at the outer feed side surface of said membrane higher than the partial pressure of said at least one gas in the bore of said membrane;

(b) removing a permeate gas mixture enriched in said at least one gas from the bore of said membrane;

wherein said membrane has a ratio of (bore diameter)$^2$/length sufficiently great that the permeate gas mixture is removed from the bore at a rate sufficiently great that the partial pressure of said at least one gas in the bore does not exceed said critical partial pressure wherein the permeability creep of the membrane is less negative than -0.1.

A further aspect of the invention relates to those hollow fiber membrane permeation processes for separating from a gas mixture at least one of an adverse affecting gas species such as carbon dioxide, hydrogen sulfide, an aromatic hydrocarbon gas, water, ammonia, a nitrogen oxide, cyanogen, methyl mercaptan or a substituted methyl gas.

A particularly preferred aspect of the invention relates to a process for separating a feed gas mixture of carbon dioxide and methane by permeation through a multicomponent hollow fiber membrane having a permeability for carbon dioxide of less than about 50 GPU wherein the total gas pressure at the open end of the bore is less than about 3.5 Kg/cm$^2$ and wherein the hollow fiber membrane has a ratio of (bore diameter)$^2$/length of greater than about 0.012 micron$^{-1}$.

## BRIEF DESCRIPTION OF THE DRAWINGS

Figure 1 graphically illustrates a typical presentation of permeability creep as the slope of the relationship of the logarithm of permeability of a species through a membrane as a function of the logarithm of time.

Figure 2 graphically illustrates permeate gas pressure profiles in the bore of hollow fiber membranes having various dimensions of bore diameter and length.

## DETAILED DESCRIPTION OF THE INVENTION

The process of this invention is advantageously useful in hollow fiber membrane gas separations where the gaseous mixture contacting the outer feed side surface of the hollow fiber polymeric membrane contains potentially adversely affecting gas species which may be present in the bore of the hollow fiber membrane at critical partial pressures. Such potentially adversely affecting gas species is often a desired permeating gas species. Such potentially adversely affecting gas species may be condensible within the polymeric material of the membrane and may promote significant permeability creep in the membrane by presence in the bore of the membrane at critical partial pressure.

The process of this invention is useful for hollow fiber membrane gas separations where the potentially adversely affecting gas species is a gas such as water; an aromatic gas like benzene, toluene or xylene; a sulfur-containing gas like hydrogen sulfide, sulfur dioxide, sulfur trioxide, carbonyl sulfide, or methyl mercaptan; a nitrogen-containing gas such as ammonia, a nitrogen oxide or a cyanogen gas; a carbon-containing gas such as carbon dioxide; or other substituted methyl gases; or combinations of such gases.

The process of this invention is particularly advantageous for separating acid gas components such as carbon dioxide and/or hydrogen sulfide from a gas mixture containing hydrocarbon gases, for instance, methane, ethane, propane, butane, etc. The polymeric hollow fiber

membranes useful in the process of this invention may be isotropic or anisotropic. Anisotropic hollow fiber membranes are generally more useful for membrane gas separations. Such anisotropic hollow fiber membranes have a thin, dense layer, usually on at least one surface of the membrane, which comprises an open cellular support matrix. It is generally desirable that the thin, dense layer be on the outer surface of the anisotropic polymeric hollow fiber membranes. The preferred anisotropic polymeric hollow fiber membranes useful in this invention are multicomponent membranes comprising a coating in occluding contact with a porous separation membrane of material which exhibits selective permeation of at least one gas of the gaseous mixture over that of one or more remaining gases in the gaseous mixture. Such multicomponent membranes are described in United States Patent 4,230,463, issued October 28, 1980.

Other hollow fiber membranes useful in the process of this invention can be provided by a number of techniques known to those skilled in the hollow fiber membrane art. Particularly useful polymers suitable for hollow fiber membranes useful in the process of this invention and procedures for preparing such membranes are set forth by Brooks et.al., in Belgian Patent 882,475. The polymeric material comprising such membranes is preferably selected on the basis of its separation capabilities, for instance, its ability to provide the desired selectivity of separation at a suitable permeate flux while maintaining sufficient strength and chemical resistance, particularly with respect to the components of the fluid streams intended to be treated using the membrane.

The selective permeation of many fluids, including gases, in many polymers has been reported. In these reported permeations, the mechanism of the separation apparently involves an interaction with the material of the membrane. Hence widely differing separation

capabilities can be achieved by the use of different polymers. For instance, polyacrylonitrile permits nitrogen to permeate over ten times as quickly as methane; whereas in a polysulfone membrane methane may permeate slightly more quickly than nitrogen.

Typical polymers which may be suitable for making hollow fiber membranes useful in the process of this invention include substituted and unsubstituted polymers selected from polysulfones; polyethersulfones; poly (styrenes), including styrene-containing copolymers such as acrylonitrile-styrene copolymers and styrene-vinylbenzylhalide copolymers; polycarbonates; cellulosic polymers, such as cellulose acetate; polyamides and polyimides; polyphenylene oxides, including bromine substituted polyphenylene oxides; etc.

Useful polysulfones are sold under trade names such as "P-1700" and "P-3500" by Union Carbide. Both commercial products are bisphenol methane-derived polysulfones (specifically, bisphenol A-derived) having a linear chain of the general formula

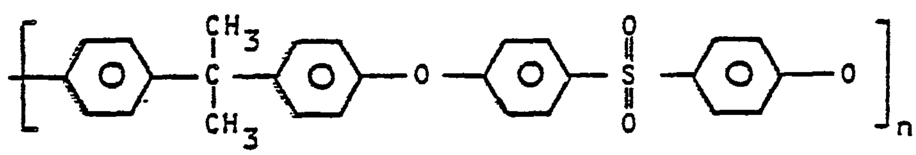

where n, representing the degree of polymerization, is about 50 to 80. Poly(arylene ether) sulfones are also advantageous.

Polymeric hollow fiber membranes useful in this invention are generally assembled into a permeator which allows for proper distribution of the feed gas mixture to the feed side surface of the membrane for effective separation and removal of the non-permeate and permeate gases. Polymeric hollow fiber membranes are particularly attractive in that the hollow fibers are generally self-supporting, even at relatively high differential pressures, and provide a greater amount of membrane surface area per unit volume of permeator than that which may be provided by flat film membranes. Thus permeators containing hollow fiber membranes may be

attractive from the standpoint of convenience, size and reduced complexity in design. Commercially attractive permeators must be able to withstand the operating conditions to which they may be subjected during separation operations and should be relatively non-complex and easily assemblable to facilitate manufacturing. A variety of permeator designs utilizing hollow fiber membranes have been developed for separation operations. Generally hollow fiber membranes are arranged in the form of a bundle embedded in at least one tube sheet which is sealed in a permeator shell. Among the useful designs are those disclosed by Rosenblatt in United States Patent 3,616,928; Maxwell et.all, in United States Patent 3,339,341; McLain in United States Patent 3,422,008; Caracciolo in United States Patent 3,528,553; McNamara et.al., in United States Patent 3,702,658; and King et. al., in United States Patent 4,315,819.

The process of this invention is advantageously useful in separating acid gas such as carbon dioxide and/or hydrogen sulfide from gas mixtures of, for instance, hydrocarbon gases such as methane, ethane, propane, and the like. Such gas mixtures are common in the petroleum and natural gas industries. For instance, in enhanced oil recovery processes utilizing carbon dioxide flooding, the casinghead gas from wellheads ofter comprises predominantly carbon dioxide and methane. It is desirable to separate these two gases, for instance, so that carbon dioxide can be reinjected for further enhanced oil recovery and so that methane can be provided for natural gas pipelines. In other instances, natural gas reservoirs often contain substantial quantities of carbon dioxide and/or hydrogen sulfide which must be removed before the predominantly methane-containing hydrocarbon gas can be utilized. In still a further instance, it is possible to recover substantial quantities of methane by separating the carbon dioxide and methane-containing gas present in mature landfills.

Traditionally the required separations for removing gases such as carbon dioxide and hydrogen sulfide have included amine scrubbing, physical absorption and cryogenic processes, among others. Membrane gas separations can provide an economically attractive alternative for such traditional processes. However, gases such as carbon dioxide and/or hydrogen sulfide often adversely affect the economic life of polymeric membranes useful in such membrane separation processes, resulting in significant permeability creep of otherwise desirable polymeric membranes.

By the use of the process of this invention, the membrane gas separation of acid gas species such as carbon dioxide and/or hydrogen sulfide can be advantageously effected without the detrimental effects of permeability creep when the hollow fiber membrane has a ratio of $(\text{bore diameter})^2/\text{length}$ sufficiently great that the partial pressure of such permeated acid gas species in the bore does not exceed the critical partial pressure of the acid gas species such that permeability creep for the polymeric membrane is maintained less negative than about -0.1. For instance, a multicomponent hollow fiber membrane comprising a coating of polysiloxane in occluding contact with a porous anisotropic hollow fiber membrane of polysulfone can be used to separate carbon dioxide from a mixture of carbon dioxide and methane by selective permeation of the carbon dioxide. However, it has been observed that such multicomponent hollow fiber membranes will exhibit a permeability creep more negative than about -0.1 when the partial pressure of permeated carbon dioxide in the bore of the hollow fiber membrane is greater than the critical partial pressure of carbon dioxide, for instance, about 15 $Kg/cm^2$ (217 psia) or even lower. Moreover, a permeability creep of about -0.1 has been observed for the same multicomponent hollow fiber membrane when the partial pressure of permeated carbon dioxide in the bore of the hollow fiber membrane is at 7.03 $Kg/cm^2$ (100 psia).

On the other hand, when the same multicomponent hollow fiber membrane is used in a membrane separation process such that the partial pressure of permeated carbon dioxide in the bore of the hollow fiber membrane is maintained below the critical partial pressure of carbon dioxide, for instance, at 5.16 $Kg/cm^2$ (73.4 psia), the membrane will exhibit a permeability creep of generally less negative than -0.1, say, about -0.02.

Permeators have been prepared utilizing multicomponent hollow fiber membranes comprising a coating of poly(siloxane), e.g., Dow Corning Sylgard® 184, in occluding contact with a porous anisotropic hollow fiber membrane of polysulfone (Union Carbide P-3500). A plurality of the hollow fiber membranes were gathered into an elongated bundle of generally parallel hollow fiber membranes. One end of the bundle of hollow fiber membranes was sealed in a cured epoxy resin tube shell such that the bores of the hollow fiber membranes communicated through the tube sheet. The other end of the hollow fiber membranes was plugged. The assembly of the bundle of hollow fiber membranes and tube sheet was sealed into an elongated tubular stell shell having an inlet port and a longitudinally distant outlet port to provide axial flow of a feed gas mixture through the shell in contact with the exterior surface of the hollow fiber membranes. A port was also provided to allow permeate gas to be evacuated from the bores of the hollow fiber membranes.

Such permeators were extensively operated in a variety of gas separation processes separating at least one gas from a feed gas mixture of a variety of gaseous constituents for instance hydrogen, carbon dioxide, hydrogen sulfide, carbon monoxide, nitrogen, argon, methane, water vapor, $C_2$-$C_6$ hydrocarbons, and the like in a variety of compositions. The membrane gas separation processes were carried out under a variety of operating conditions of temperature and pressure for instance feed gas temperatures ranging from about 10°C

and lower to about 50°C and higher and feed gas pressures ranging from 7 Kg/cm$^2$ (100 psia) to 70 Kg/cm$^2$ (2000 psia) and higher. The membrane gas separations were also conducted under a variety of permeate gas pressures for instance from about 1 Kg/cm$^2$ or lower to about 70 Kg/cm$^2$ or higher. The membrane gas separations were conducted under conditions of various permeation driving force, that is, differences in chemical potential or partial pressures differential across the wall of the hollow fiber membrane.

As a result of such extensive membrane gas separation operations a considerable body of membrane permeation data has been accumulated. Such membrane permeation data relates to the performance of multicomponent hollow fiber membranes and includes permeabilities ($P_i/\ell$), for any of the above-mentioned gas constituents "i" and separation factors, $\alpha$, which represent the ratio of permeabilities of different gas constituents. The availability of such membrane gas separation performance data assures that computer-assisted simulations of hollow fiber membrane gas separations can be utilized to predict membrane gas separator performance with reasonable accuracy. Such computer-assisted simulations of hollow fiber membrane gas separator utilize a number of overall membrane gas separator parameters, such as hollow fiber dimensions, for instance bore diameter, hollow fiber membrane length and total hollow fiber membrane mass transfer area; feed gas compositions; desired separated gas compositions and conditions, such as the desired recovery or purity of a particular species in either the permeate or non-permeate gas; and the like. A number of variables can be fixed and a simulation conducted to predict other variables. Such computer-assisted hollow fiber membrane gas separation simulation can also provide a pressure profile of the permeating gas mixture in the bore of the hollow fiber membrane. The following examples are illustrative of such computer-assisted simulations of hollow fiber membrane gas separations.

EXAMPLE I

This example demonstrates a computer-assisted simulation of a membrane gas separation utilizing a permeator comprising multicomponent hollow fiber membrane to separate a gas mixture comprising carbon dioxide and methane. The hollow fiber membranes have one end open and the other end plugged and are specified at dimensions of 135 microns in bore diameter and 1.5 meters in length. The membrane permeation properties are arbitrarily specified as $(P_{CO_2}/\ell)$ of 50 GPU and $(P_{CH_4}/\ell)$ of 3.3 GPU. The simulation summarized in Table II predicts that a feed gas mixture of 80.2 mole percent carbon dioxide, 11.5 mole percent methane can be separated with 95 percent recovery of the total carbon dioxide in the permeate gas stream at a purity of 94.3 percent carbon dioxide. The simulation also predicts that the permeate gas pressure profile in the bore of the hollow fiber membranes rises from 3.5 $Kg/cm^2$. At the open end of the bore to 8.12 $Kg/cm^2$ at the plugged end of the fiber. This pressure profile is further illustrated by curve A of Figure 2.

TABLE II

Membrane Gas Separation Simulation:

| | |
|---|---|
| Feed Gas: Temperature: | 49°C (120°F) |
| Pressure: | 43 Kg/$cm^2$ (610 psia) |
| Composition: | $CO_2$ - 80.2 mole percent<br>$CH_4$ - 11.5 mole percent<br>other gases - 8.3 mole percent |
| Permeate Gas Composition: | $CO_2$ - 94.3 mole percent<br>$CH_4$ - 3.2 mole percent<br>other gases - 2.5 mole percent |
| $CO_2$ Recovery in Permeate: | 95.2 percent |
| Non-Permeate Gas Composition: | $CO_2$ - 20.0 mole percent<br>$CH_4$ - 47.0 mole percent<br>other gases - 33.0 mole percent |
| Bore Exit Pressure of Permeate Gas: | 3.5 Kg/$cm^2$ (50 psia) |
| Hollow Fiber Membrane Dimensions: | |
| Bore Diameter: | 135 microns |
| Length: | 1.5 meters |
| Membrane Performance Parameters: | |
| $(P/\ell)_{CO_2}$: | 50 GPU |
| $\alpha \frac{CO_2}{CH_4}$: | 15 |

Permeate Gas Pressure Profile in Bore [Kg/$cm^2$]

Distance From Open End of Bore [meters]

| 0 | 0.25 | 0.5 | 0.75 | 1.0 | 1.25 | 1.5 |
|---|---|---|---|---|---|---|
| 3.5 | 5.6 | 6.8 | 7.5 | 7.9 | 8.1 | 8.2 |

EXAMPLE II

A computer-assisted simulation of hollow fiber membrane gas separation of Example I was repeated with the hollow fiber membrane length increased to 3.0 meters (10 feet). Approximately the same permeate gas composition and carbon dioxide recovery were predicted. However the total permeate gas pressure drop in the bore of the hollow fiber membrane increased to 10.6 $Kg/cm^2$ (151 psia). The predicted permeate gas pressure profile in the bore of the hollow fiber membrane is illustrated as curve B in Figure 2 and is shown in Table III.

TABLE III

| Permeate Gas Pressure Profile in Bore [$Kg/cm^2$] | | | | | | |
|---|---|---|---|---|---|---|
| Distance From Open End of Bore [meters] | | | | | | |
| 0 | 0.5 | 1.0 | 1.5 | 2.0 | 2.5 | 3.0 |
| 3.5 | 8.8 | 11.2 | 12.7 | 13.6 | 14.1 | 14.1 |

This simulation illustrates that permeate gas pressure in the bore of this longer length of hollow fiber membrane increases significantly as compared to the pressures in the bore of the shorter length of hollow fiber membrane illustrated in Example I. Since carbon dioxide concentration in the bore is about 95 percent, the partial pressure of carbon dioxide in the bore is about 95 percent of the total pressure in the bore as represented by the profile in Table II and curve B of Figure 2. Thus it can be expected that the partial pressure of carbon dioxide in the bore can exceed a

critical partial pressure of carbon dioxide for the membrane. Accordingly it is expected that a significant portion of the length of the hollow fiber membrane would experience adverse permeability creep more negative than about -0.1 under conditions of the membrane gas separation simulated.

EXAMPLE III

The computer-assisted simulation of hollow fiber membrane gas separation of Example II was repeated with the hollow fiber membrane bore diameter increased to 225 microns. Approximately the same permeate gas composition and carbon dioxide recovery were predicted. However the total permeate gas pressure drop in the bore of the hollow fiber membranes was significantly decreased to about 3.0 $Kg/cm^2$ (42 psia). The predicted permeate gas pressure profile in the bore of the hollow fiber membrane is illustrated as curve C in Figure 2 and shown in Table IV. This simulation illustrates that the permeate gas pressure profile in the bore of the hollow fiber membrane can be significantly reduced by increasing the bore of the hollow fiber membrane. Accordingly the partial pressure of carbon dioxide in the bore of the hollow fiber membrane can be expected to be less than a critical partial pressure of carbon dioxide for the membrane gas separation simulated. Thus it is expected that the hollow fiber membrane would not be adversely affected by the levels of carbon dioxide in the bore of the hollow fiber membrane and consequently the hollow fiber membrane would not experience adverse permeability creep more negative than about -0.1 for the membrane gas separation simulated.

TABLE IV

Permeate Gas Pressure Profile in Bore
[$Kg/cm^2$]

Distance From Open End of Bore meters

| 0 | 0.5 | 1.0 | 1.5 | 1.0 | 2.5 | 3.0 |
|---|---|---|---|---|---|---|
| 3.5 | 4.8 | 5.6 | 6.0 | 6.3 | 6.4 | 6.5 |

EXAMPLE IV

The computer-assisted simulation of hollow fiber membrane gas separation of Example III was repeated with the hollow fiber membrane length increased to 6.0 meters. Approximately the same permeate gas composition and carbon dioxide recovery were predicted. However the total permeate gas pressure drop in the bore of the hollow fiber membrane was increased to 7.4 $Kg/cm^2$ (105 psia). The predicted permeate gas pressure profile in the bore of the hollow fiber membrane is illustrated as curve D in Figure 2 and shown in Table V.

TABLE V

Permeate Gas Pressure Profile in Bore
[$Kg/cm^2$]

Distance From Open End of Bore meters

| 0 | 1 | 2 | 3 | 4 | 5 | 6 |
|---|---|---|---|---|---|---|
| 3.5 | 7.0 | 8.8 | 9.9 | 10.5 | 10.8 | 10.9 |

This simulation, together with the simulation of Example II, illustrates that permeate gas pressure in the bore increases with the length of hollow fiber membrane utilized. Moreover this simulation indicates that carbon dioxide partial pressure in most of the length of the bore would exceed 7.0 $Kg/cm^{-2}$ (100 psia) which is near the range of the critical partial pressure of carbon dioxide for the hollow fiber membrane utilized.

The above four examples illustrate that as the hollow fiber membrane dimensions of bore diameter and length can be manipulated to achieve permeate gas pressure profiles to avoid any tendency for the partial pressure of adversely affected species in the bore of the hollow fiber to exceed critical partial pressures of the adverse affecting species for the membrane utilized. It is often desirable to utilize as long a length of hollow fiber membrane as possible to achieve those economies of scale in manufacturing hollow fiber membranes that are attendant with increasing length of hollow fiber membranes. The above examples further illustrate that such economies can be achieved by utilizing hollow fiber membranes with a sufficiently large bore diameter such that the total pressure in the

bore of the hollow fiber membrane can be reduced to a level where the partial pressure of an adverse affecting species will not exceed a critical partial pressure of the adverse affecting species for the membrane utilized.

EXAMPLE V

Further computer-assisted simulation of membrane gas separation, as in Examples I through IV, was conducted with bore diameter of 135, 180, 225 and 250 microns and hollow fiber lengths of 1.5, 3.0 and 6.0 meters (5, 10 and 20 feet).

The total pressure drop of permeate gas in the bore of the hollow fiber membranes as predicted is shown in Table VI.

TABLE VI

| | Bore Pressure Drop of Permeate Gas [$Kg/cm^2$] | | |
|---|---|---|---|
| | Hollow Fiber Membrane Length [meters] | | |
| Bore Diameter [microns] | 1.5 | 3.0 | 6.0 |
| 135 | 4.6 | 10.5 | 19.7 |
| 180 | 2.0 | 5.4 | 12.0 |
| 225 | 0.9 | 3.0 | 7.3 |
| 250 | 0.7 | 2.2 | 6.0 |

Since the bore exit pressure must be maintained at some reasonable working pressure, a bore exit pressure of 3.5 $Kg/cm^2$ (50 psia) can be used to illustrate a maximum permeate gas pressure in the bore by adding 3.5 $Kg/cm^2$ to the values of Table VI. This maximum

permeate gas pressure is illustrated in Table VII.

TABLE VII

| Bore Diameter [microns] | Maximum Permeate Gas Pressure [$Kg/cm^2$]<br>Hollow Fiber Membrane Length [meters] 1.5 | 3.0 | 6.0 |
|---|---|---|---|
| 135 | 8.1 | 14.0 | 23.2 |
| 180 | 5.5 | 8.9 | 15.5 |
| 225 | 4.4 | 6.5 | 10.8 |
| 250 | 4.2 | 5.7 | 9.5 |

The partial pressure of carbon dioxide in the permeate gas is about 0.95 times the total permeate gas pressure at any point along the length of the hollow fiber membrane.

Experimental work has indicated that the critical partial pressure of carbon dioxide for the membrane utilized in the simulations of Examples I through V may be about 7.0 $Kg/cm^2$ (100 psia). Accordingly to avoid the adverse effects of permeability creep more negative than about -0.1, it is desirable to effect a membrane gas separation similar to that simulated only with those hollow fiber membranes with dimensions that would result in a maximum permeate gas pressure less than about 7.0 $Kg/cm^2$ (100 psia).

TABLE VIII

| Bore Diameter [microns] | Hollow Fiber Membrane Dimensions Characterization (Bore Diameter)$^2$/Length [micron$^{-1}$] | | |
|---|---|---|---|
| | Hollow Fiber Membrane Length [meters] | | |
| | 1.5 | 3.0 | 6.0 |
| 135 | 0.012 | 0.006 | 0.003 |
| 180 | 0.021 | 0.011 | 0.005 |
| 225 | 0.033 | 0.016 | 0.083 |
| 250 | 0.040 | 0.020 | 0.010 |

A comparison of the hollow fiber membrane dimension characterization of (bore diameter)$^2$/length in Table VIII and the maximum permeate gas pressure in Table VII illustrate that for a membrane gas separation of a feed gas comprising carbon dioxide and methane utilizing the multicomponent hollow fiber membrane as illustrated in Example I that adverse effects of permeability creep promoted by critical partial pressures of carbon dioxide can be avoided by selecting hollow fiber membranes having a ratio of (bore diameter)$^2$/length of $>$ 0.012 microns$^{-1}$.

WHAT IS CLAIMED IS:

1. A process to separate at least one gas from a feed gas mixture by permeation through a hollow fiber membrane having an outer feed side surface and a central bore, said hollow fiber membrane exhibiting selectivity to the permeation of said at least one gas and said hollow fiber membrane having a permeability creep more negative than about -0.1 when exposed to critical partial pressures of said at least one gas, said process comprising:

(a) permeating a gas mixture enriched in said at least one gas from the outer feed side surface to the bore of said membrane, said permeating being effected by maintaining the partial pressure of said at least one gas at the outer feed side surface of said membrane higher than the partial pressure of said at least one gas in the bore of said membrane;

(b) removing a permeate gas mixture enriched in said at least one gas from the bore of said membrane;

wherein said membrane has a ratio of $(\text{bore diameter})^2/\text{length}$ sufficiently great that the permeate gas mixture is removed from the bore at a rate sufficiently great that the partial pressure of said at least one gas in the bore does not exceed said critical partial pressure wherein the permeability creep of the membrane is less negative than -0.1.

2. The process of claim 1 wherein said at least one gas comprises at least one of carbon dioxide, hydrogen sulfide, an aromatic hydrocarbon gas, water, ammonia, a nitrogen oxide, cyanogen, methyl mercaptan, or a substituted methyl gas.

3. The process of claim 2 wherein said feed gas mixture comprises carbon dioxide and methane.

4. The process of claim 3 wherein the hollow fiber membrane is a multicomponent hollow fiber membrane comprising a coating in occluding contact with a porous separation membrane comprising at least one of a polysulfone, a polyethersulfone, a polyphenylene oxide, a polyamide, a cellulose acetate, or a bromine substituted polyphenylene oxide.

5. The process of claim 4 wherein the multicomponent hollow fiber membrane comprises a coating in occluding contact with a porous separation membrane comprising a bisphenol-A polysulfone.

6. The process of claim 5 wherein the multicomponent membrane has a permeability for carbon dioxide of from about 10 to about 50 x $10^{-6}$ $cm^3$(STP)/$cm^2$-sec-cmHg.

7. The process of claim 6 wherein the total gas pressure at the open end of the bore is from about 0.35 to about 3.5 $Kg/cm^2$.

8. The process of any of claims 1 to 7 wherein the membrane has a ratio of $(\text{bore diameter})^2$/length of greater than about 0.012 $\text{micron}^{-1}$.

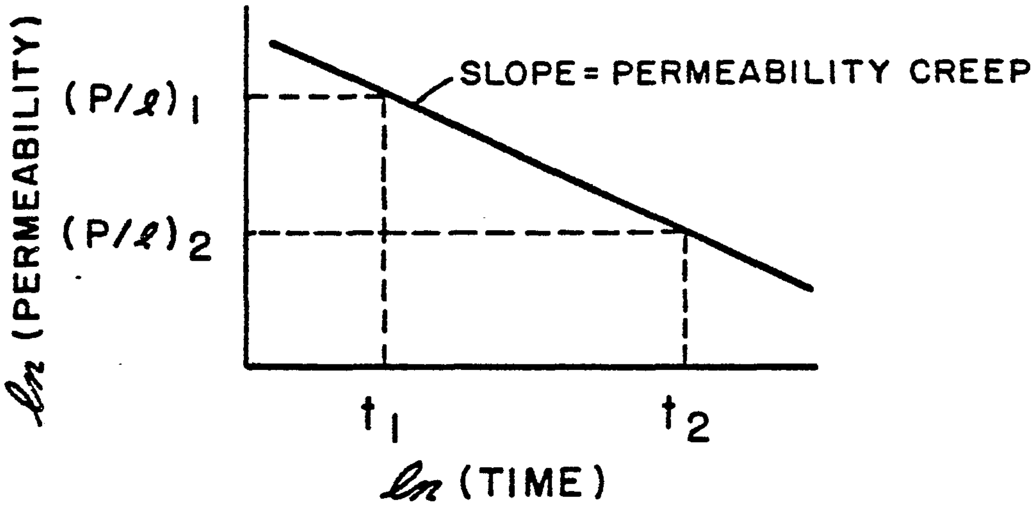
SLOPE = PERMEABILITY CREEP
(P/ℓ)1
(P/ℓ)2
ℓn (PERMEABILITY)
t1
t2
ℓn (TIME)

FIG. 1.

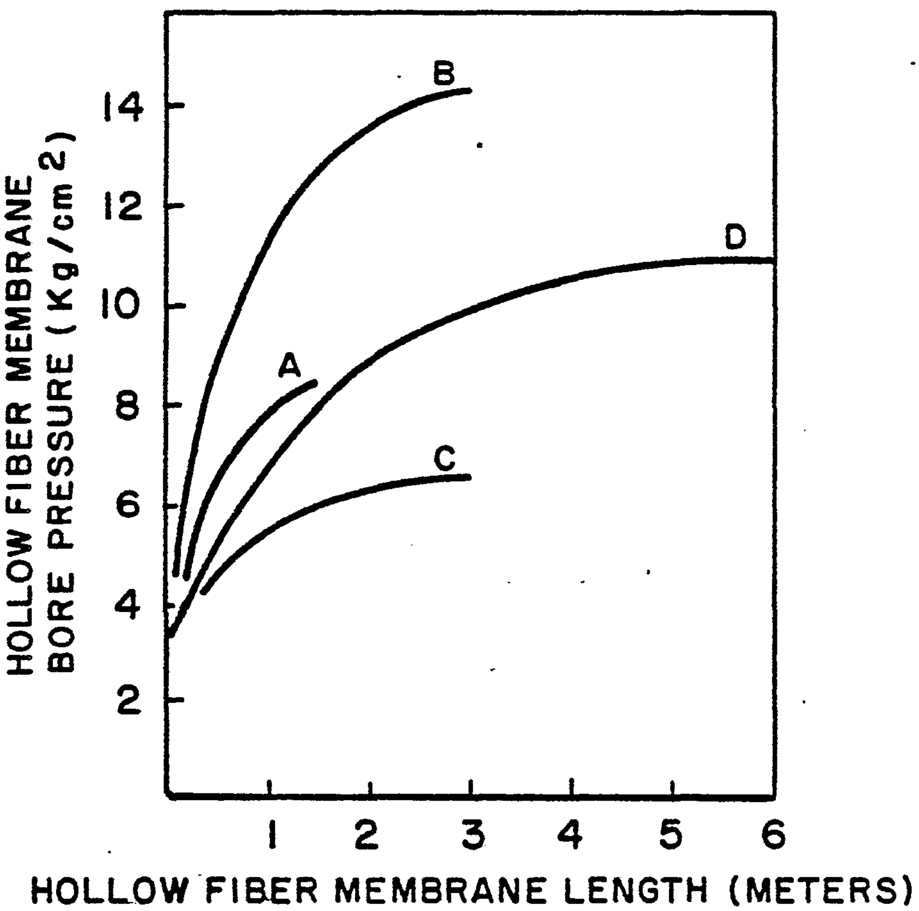
HOLLOW FIBER MEMBRANE
BORE PRESSURE (Kg/cm 2)
14
12
10
8
6
4
2
B
D
A
C
1
2
3
4
5
6
HOLLOW FIBER MEMBRANE LENGTH (METERS)

FIG. 2.

0098823

European Patent Office

# EUROPEAN SEARCH REPORT

Application number

EP 83 87 0055

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | EP-A-0 051 469 (MONSANTO CO.) * Claim 12; example 1; page 6, lines 10-13 * --- | 1-4 | B 01 D 53/22 |
| A | CHEMIE-INGENIEUR-TECHNIK, vol. 36, no. 10, 1964 K. KÜMMERLE "Selektive Permeation durch nicht-poröse Membranen", Seiten 1028-1033 * Figure 18 * --- | 1 | |
| A | AU-B- 495 540 (INSTITUTE OF GAS TECHNOLOGY) * Claim 1; example 1 * --- | 1-4,6, 7 | |
| A | P. GRASSMANN "Physikalische Grundlagen der Verfahrenstechnik", 2. Auflage 1970, VERLAG SAUERLÄNDER, Aarau, Frankfurt, pages 444-451 * Page 446, lines 29-34 * --- | 1,8 | TECHNICAL FIELDS SEARCHED (Int. Cl. 3) |
| | | | B 01 D 53/00 |
| A | EP-A-0 009 374 (ALBANY INTERNATIONAL CORP.) * Claims 1, 3-6, 9; page 6, line 17 - page 7, line 8 * ----- | 1,8 | |

The present search report has been drawn up for all claims

| Place of search | Date of completion of the search | Examiner |
|---|---|---|
| BERLIN | 18-09-1983 | BERTRAM H E H |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82